# EUROPEAN PATENT APPLICATION

(11) **EP 3 659 879 A1**
(43) Date of publication of application: **03.06.2020**
(21) Application number: 19209748.3
(22) Date of filing: 18.11.2019
(51) Int. Cl.: B60T 17/22, F16D 66/00, G01K 1/02, G01K 3/06

(54) **TEMPERATURE MONITORING TO DETECT BRAKE FAILURE**

(30) Priority: 30.11.2018 US 201816206689
(71) Applicant: Goodrich Corporation, Charlotte, NC 28217-4578 (US)
(72) Inventor: BURTE, Paul R., Clayton, OH Ohio 45315-9766 (US)
(74) Representative: Dehns

(57) **Abstract**

A system for determining brake failure is disclosed. In various embodiments, the system includes a plurality of brake mechanisms (100); a plurality of sensors connected among the plurality of brake mechanisms (100) and configured to provide temperature data corresponding to each of the plurality of brake mechanisms (100) to a processor; and an output device configured to provide an alert upon a determination by the processor that one or more of the plurality of brake mechanisms is operating at an abnormally cold temperature.

## Description

### FIELD

The present disclosure relates to aircraft wheel and brake assemblies and, more particularly, to methods and apparatus for failure detection in aircraft brake assemblies based on temperature monitoring.

### BACKGROUND

Aircraft typically utilize brake systems on wheels to slow or stop the aircraft during landings, taxiing and rejected takeoffs. The brake systems generally employ a brake stack comprising a series of friction disks that may be forced into sliding contact with one another during brake actuation to slow or stop the aircraft. Under various conditions, brake actuation may generate high temperatures and frictional loads throughout the brake stack and particularly on the surfaces of the stators and rotors that comprise the brake stack. The high temperatures and other rigorous structural demands throughout the brake system may also comprise other components of the brake system, such as, for example, tubing or actuators within a hydraulic system configured to affect a braking operation. Temperature sensors and analysis of temperature data derived from such sensors may be used to monitor the health of the brake system and provide an indication when service or replacement is warranted.

### SUMMARY

A system for determining brake failure is disclosed. In various embodiments, the system includes a plurality of brake mechanisms; a plurality of sensors connected among the plurality of brake mechanisms and configured to provide temperature data corresponding to each of the plurality of brake mechanisms to a processor; and an output device configured to provide an alert upon a determination by the processor that one or more of the plurality of brake mechanisms is operating at an abnormally cold temperature.

In various embodiments, each of the plurality of brake mechanisms includes a brake stack and the plurality of sensors is configured to monitor a temperature of the brake stack within each of the plurality of brake mechanisms. In various embodiments, the brake stack within each of the plurality of brake mechanisms includes a pressure plate and at least one of the plurality of sensors is connected to the pressure plate.

In various embodiments, the processor is configured to determine a location temperature value based on the temperature data corresponding to each of the plurality of brake mechanisms. In various embodiments, the processor is configured to determine a statistical dispersion temperature value based on the temperature data corresponding to each of the plurality of brake mechanisms. In various embodiments, the processor is configured to determine that one or more of the plurality of brake mechanisms is operating at the abnormally cold temperature by comparing the temperature data corresponding to each of the plurality of brake mechanisms to the location temperature value and the statistical dispersion temperature value. In various embodiments, the location temperature value is a mean temperature value and the statistical dispersion temperature value is a multiple of a standard deviation. In various embodiments, the processor is configured to determine that one or more of the plurality of brake mechanisms is operating at the abnormally cold temperature by comparing the temperature data corresponding to each of the plurality of brake mechanisms to the mean temperature value minus the multiple of the standard deviation.

In various embodiments, one or more pressure sensors is connected among the plurality of brake mechanisms and configured to provide pressure data corresponding to each of the plurality of brake mechanisms to the processor. In various embodiments, the output device is an indicator light disposed within an aircraft cockpit or maintenance diagnostic equipment configured to connect to the processor.

A brake system for an aircraft is disclosed. In various embodiments, the brake system includes a plurality of brake mechanisms, including a first brake mechanism and a second brake mechanism; a first temperature sensor connected to the first brake mechanism and configured to provide a first temperature data corresponding to the first brake mechanism to a processor; a second temperature sensor connected to the second brake mechanism and configured to provide a second temperature data corresponding to the second brake mechanism to the processor; and an output device configured to provide an alert upon a determination by the processor that one or more of the first brake mechanism and the second brake mechanism is operating at an abnormally cold temperature.

In various embodiments, the first brake mechanism includes a first brake stack and the first temperature sensor is configured to monitor a first temperature of the first brake stack and the second brake mechanism includes a second brake stack and the second temperature sensor is configured to monitor a second temperature of the second brake stack.

In various embodiments, the processor is configured to determine a mean temperature corresponding to at least the first temperature data and the second temperature data. In various embodiments, the processor is configured to determine a standard deviation based on the mean temperature corresponding to at least the first temperature data and the second temperature data. In various embodiments, the processor is configured to determine that at least one of the first brake mechanism and the second brake mechanism is operating at the abnormally cold temperature by comparing the first temperature data and the second temperature data to the mean temperature minus a multiple of the standard deviation.

In various embodiments, one or more pressure sensors is connected among the plurality of brake mechanisms and configured to provide pressure data corresponding to each of the plurality of brake mechanisms to the processor. In various embodiments, the output device is an indicator light disposed within an aircraft cockpit or maintenance diagnostic equipment configured to connect to the processor.

A method for detecting a failure among a plurality of brake mechanisms is disclosed. In various embodiments, the methods includes the steps of receiving a temperature data stream from a plurality of temperature sensors corresponding to the plurality of brake mechanisms; determining a location temperature value and a statistical dispersion temperature value based on the temperature data stream; comparing the temperature data stream to the location temperature value minus a multiple of the statistical dispersion temperature value; and generating an indication if one or more of the plurality of brake mechanisms is operating at an abnormally cold temperature based on the comparing the temperature data stream to the location temperature value minus the multiple of the statistical dispersion temperature value.

In various embodiments, the location temperature value is a mean temperature value and the statistical dispersion temperature value is a standard deviation and a processor is configured to determine that one or more of the plurality of brake mechanisms is operating at the abnormally cold temperature by comparing the temperature data stream to the mean temperature value minus the multiple of the standard deviation. In various embodiments, each of the plurality of brake mechanisms includes a brake stack and the plurality of temperature sensors is configured to monitor a temperature of the brake stack within each of the plurality of brake mechanisms.

### BRIEF DESCRIPTION OF THE DRAWINGS

The accompanying drawings illustrate various embodiments employing the principles described herein and are a part of the specification. The illustrated embodiments are meant for description and not to limit the scope of the claims.
FIG. 1A illustrates an exemplary aircraft having a brake system, in accordance with various embodiments;
FIG. 1B illustrates a cross-sectional view of a brake mechanism, in accordance with various embodiments;
FIG. 2 illustrates a schematic view of a brake system, in accordance with various embodiments; and
FIG. 3 illustrates a flow chart for detecting a failure within a brake system, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

As used herein, a first component that is "radially outward" of a second component means that the first component is positioned at a greater distance away from a common axis than the second component. A first component that is "radially inward" of a second component means that the first component is positioned closer to the common axis than the second component. In the case of components that rotate circumferentially about a common axis, a first component that is radially inward of a second component rotates through a circumferentially shorter path than the second component. As used herein, "distal" refers to the direction outward, or generally, away from a reference component. As used herein, "proximal" and/or "proximate" refer to a direction inward, or generally, towards the reference component. All ranges may include the upper and lower values, and all ranges and ratio limits disclosed herein may be combined. Unless specifically stated otherwise, reference to "a," "an" or "the" may include one or more than one and reference to an item in the singular may also include the item in the plural.

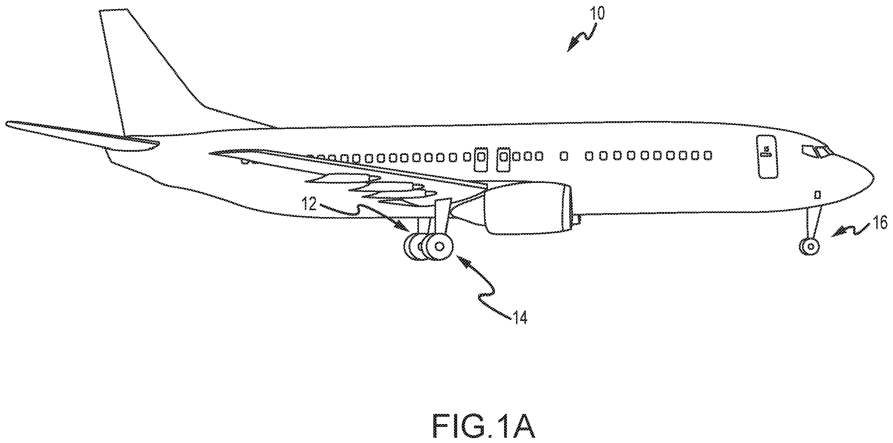

Referring to FIG. 1A, in accordance with various embodiments, an aircraft 10 is illustrated. The aircraft 10 includes landing gear, which may include a left main landing gear 12, a right main landing gear 14 and a nose landing gear 16. The landing gear support the aircraft 10 when it is not flying, allowing the aircraft 10 to taxi, take off and land without damage. While the disclosure refers to the three landing gear configurations just described, the disclosure nevertheless contemplates any number of landing gear configurations.

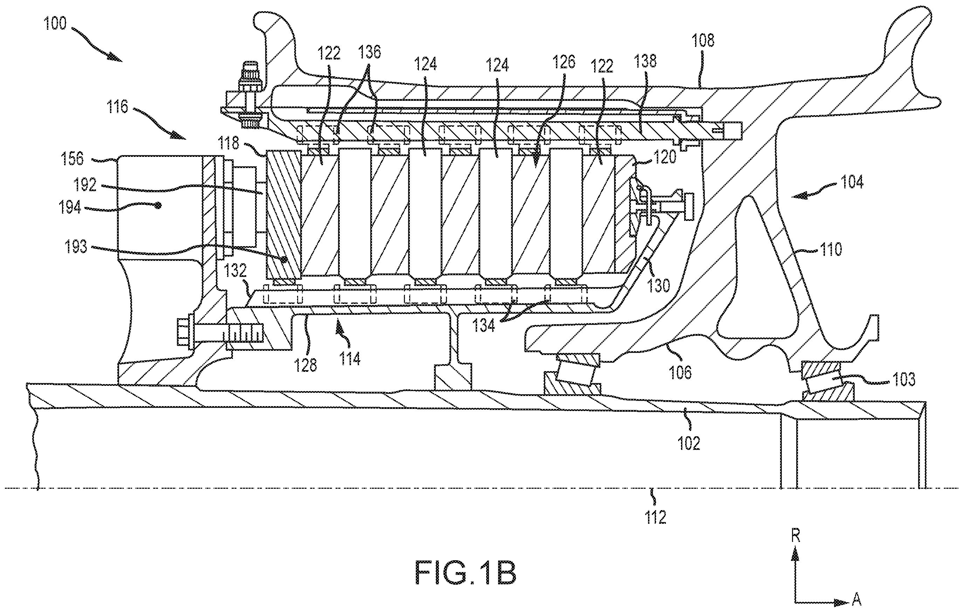

Referring now to FIG. 1B, there is schematically depicted a brake mechanism 100 configured for use on a landing gear, such as, for example, each of the left main landing gear 12 and the right main landing gear 14 described above with reference to FIG. 1A. In various embodiments, the brake mechanism is mounted on an axle 102 for use with a wheel 104 disposed on and configured to rotate about the axle 102 via one or more bearing assemblies 103. The wheel 104 includes a hub 106, a wheel well 108 concentric about the hub 106 and a web portion 110 interconnecting the hub 106 and the wheel well 108. A central axis 112 extends through the axle 102 and defines a center of rotation of the wheel 104. A torque plate barrel 114 (sometimes referred to as a torque tube or barrel or a torque plate or back leg) is aligned concentrically with the hub 106, and the wheel 104 is rotatable relative to the torque plate barrel 114.

The brake mechanism 100 includes a piston assembly 116, a pressure plate 118 disposed adjacent the piston assembly 116, an end plate 120 positioned a distal location from the piston assembly 116, and a plurality of rotor disks 122 interleaved with a plurality of stator disks 124 positioned intermediate the pressure plate 118 and the end plate 120. The pressure plate 118, the plurality of rotor disks 122, the plurality of stator disks 124 and the end plate 120 together form a brake heat sink or brake stack 126. The pressure plate 118, the end plate 120 and the plurality of stator disks 124 are mounted to the torque plate barrel 114 and remain rotationally stationary relative to the axle 102.

The torque plate barrel 114 may include an annular barrel or torque tube 128 and an annular plate or back leg 130. The back leg 130 is disposed at an end distal from the piston assembly 116 and may be made monolithic with the torque tube 128, as illustrated in FIG. 1B, or may be made as a separate annular piece and suitably connected to the torque tube 128. The torque tube 128 has a plurality of circumferentially spaced and axially extending splines 132 disposed on an outer surface of the torque tube 128. The plurality of stator disks 124 and the pressure plate 118 include notches or stator slots 134 on an inner periphery of the disks and the plate for engagement with the splines 132, such that each disk and the plate are axially slidable with respect to the torque tube 128.

The end plate 120 is suitably connected to the back leg 130 of the torque plate barrel 114 and is held non-rotatable, together with the plurality of stator disks 124 and the pressure plate 118, during a braking action. The plurality of rotor disks 122, interleaved between the pressure plate 118, the end plate 120 and the plurality of stator disks 124, each have a plurality of circumferentially spaced notches or rotor lugs 136 along an outer periphery of each disk for engagement with a plurality of torque bars 138 that is secured to or made monolithic with an inner periphery of the wheel 104.

An actuating mechanism for the brake mechanism 100 includes a plurality of piston assemblies, including the piston assembly 116, circumferentially spaced around a piston housing 156 (only one piston assembly is illustrated in FIG. 1B). Each of the plurality of piston assemblies includes a piston 192 configured to apply a load against the pressure plate 118. Upon actuation, the plurality of piston assemblies affect a braking action by urging the pressure plate 118 and the plurality of stator disks 124 into frictional engagement with the plurality of rotor disks 122 and against the end plate 120. Fluid or hydraulic pressure, mechanical springs or electric actuators, among other mechanisms, may be used to actuate the plurality of piston assemblies. Through compression of the plurality of rotor disks 122 and the plurality of stator disks 124 between the pressure plate 118 and the end plate 120, the resulting frictional contact slows or stops or otherwise prevents rotation of the wheel 104. The plurality of rotor disks 122 and the plurality of stator disks 124 are fabricated from various materials, such as ceramic matrix composites, that enable the brake disks to withstand and dissipate the heat generated during and following a braking action.

The brake mechanism 100 may include a temperature sensor 193 (or several temperature sensors). In various embodiments, for example, the temperature sensor 193 may be disposed within or on a surface of the pressure plate 118. The temperature sensor 193 may be configured to provide a signal representative of the temperature occurring within the brake stack 126 or within other components of the brake mechanism 100. The brake mechanism may also include a pressure sensor 194 (or several pressure sensors). In various embodiments, for example, the pressure sensor 194 may be disposed within a hydraulic line that extends through or is adjacent the piston housing 156 and that supplies hydraulic fluid used to operate the piston 192. As described further below, in various embodiments, the temperature sensor 193 and the pressure sensor 194 may be employed to monitor the health of the brake mechanism 100 or the brake system of which the brake mechanism 100 is a component thereof and to alert maintenance personnel when repair or replacement of the brake mechanism 100 or the larger brake system is warranted.

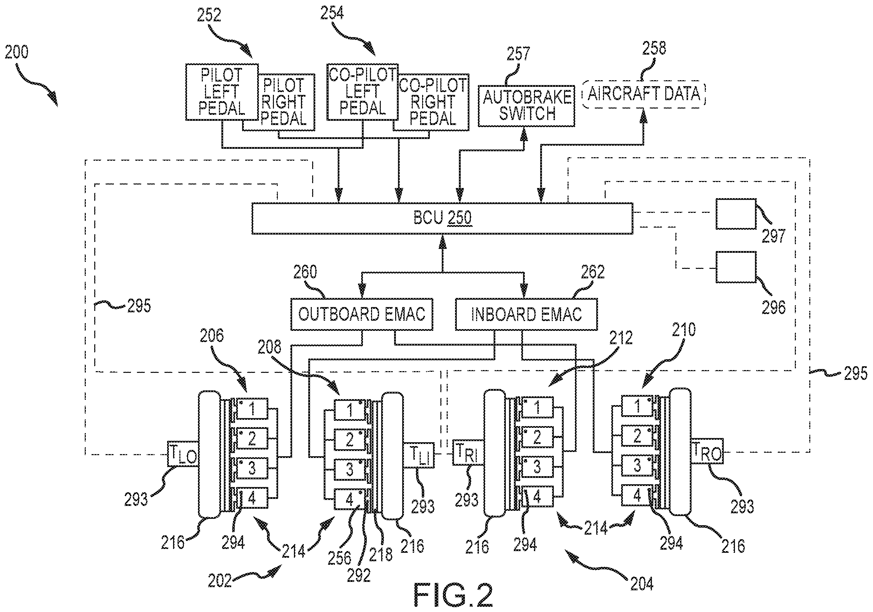

Referring now to FIG. 2, a schematic view of a brake system 200 is provided, in accordance with various embodiments. The brake system 200 includes a plurality of landing gear, such as, for example, a left main landing gear 202 and a right main landing gear 204. The left main landing gear 202 includes a left outboard brake mechanism 206 and a left inboard brake mechanism 208. Similarly, the right main landing gear includes a right outboard brake mechanism 210 and a right inboard brake mechanism 212. One or more tires 216 may be included with each of the left main landing gear 202 and the right main landing gear 204. Similar components as those described above and below may be included in additional landing gear, such as, for example, the nose landing gear 16 described above with reference to FIG. 1A. Additionally, while left and right orientations for the landing gear and brake mechanisms are described above, the same components may be referred to as a first landing gear and a second landing gear, each having a first brake mechanism and a second brake mechanism, without loss of generality.

In various embodiments, each of the left outboard brake mechanism 206, the left inboard brake mechanism 208, the right outboard brake mechanism 210 and the right inboard brake mechanism 212 includes a plurality of actuators 214, labeled #1, #2, #3 and #4. Each of the plurality of actuators 214 may comprise a piston housing 256 and a piston 292 configured to apply a load against a pressure plate 218, similar to, for example, the piston housing 156, the piston 192 and the pressure plate 118 described above with reference to FIG. 1B. In addition, each of the plurality of actuators 214 may include a pressure sensor 294, such as, for example, the pressure sensor 194 described above with reference to FIG. 1B, while each of the aforementioned brake mechanisms may include a temperature sensor 293, such as, for example, the temperature sensor 193 described above with reference to FIG. 1B.

In various embodiments, the brake system 200 is controlled by a brake control unit 250. The brake control unit (BCU) 250 is configured to receive various operator inputs, such as, for example, left and right pilot brake pedal signals from left and right pilot brake pedals 252 and left and right co-pilot brake pedal signals from left and right co-pilot brake pedals 254. The brake pedal signals can be generated, for example, via linear variable differential transformers (LVDTs) operatively coupled to the respective pedals. As the pedals are depressed, each LVDT generates a voltage signal corresponding to the degree of pedal deflection, and this voltage signal can be provided to the BCU 250. Other methods for generating the brake pedal signals may also be employed, including encoders, potentiometers, or the like. The BCU 250 may also receive other operator inputs, such as data from an autobrake switch 257 for configuring autobrake logic. The autobrake switch 257 may include several settings, such as, for example, an enable/disable input, an auto braking level input (*e.g.,* low, medium, high) and a rejected take off (RTO) input (*e.g.,* for enabling or disabling RTO functionality). In various embodiments, the BCU 250 may also receive other aircraft data input 258, such as, for example, from sensor data concerning pressure in hydraulic lines or temperatures of brake stacks.

In various embodiments, the BCU 250 is operatively coupled to one or more electro-mechanical actuator controllers (EMACs), including, for example, an outboard EMAC 260 and an inboard EMAC 262. In various embodiments, the outboard EMAC 260 is configured to receive brake force signals from the BCU 250 and control operation of the left outboard brake mechanism 206 and the right outboard brake mechanism 210, while the inboard EMAC 262 is configured to receive brake force signals from the BCU 250 and control operation of the left inboard brake mechanism 208 and the right inboard brake mechanism 212. In various embodiments, the BCU 250 is configured to derive the brake force signal based on brake data generated by the left and right pilot brake pedals 252 or the left and right co-pilot brake pedals 254 or on brake data generated by the autobrake switch 257 or the other aircraft data input 258. In various embodiments, the outboard EMAC 260 and the inboard EMAC 262 are electrically or hydraulically coupled to the plurality of actuators 214 and operate the piston 292 associated with each one of the plurality of actuators 214.

In various embodiments, the temperature sensor 293 associated with each brake mechanism and the pressure sensor 294 associated with each of the plurality of actuators 214 are electrically coupled to the BCU 250 via one or more data buses 295. In such fashion, the BCU 250 may be configured to monitor all components of the left main landing gear 202 and the right main landing gear 204, including, for example, all components within each of the left outboard brake mechanism 206, the left inboard brake mechanism 208, the right outboard brake mechanism 210 and the right inboard brake mechanism 212. In various embodiments, and as described further below, the BCU 250 may be configured to monitor temperature data received from the temperature sensor 293 associated with each brake mechanism and detect one or more failures that may be occurring during a brake activation. More particularly, in various embodiments, the BCU 250 may be configured to detect a failure based on a temperature sensor (*e.g.,* the temperature sensor 193 described above with reference to FIG. 1B) indicating an abnormally cold reading, which may be caused, for example, by a clogged or otherwise compromised hydraulic line leading to failure or inoperability of one of the plurality of actuators 214 or a piston 292 associated therewith.

In various embodiments, the process of detecting a failure based on an abnormally cold reading employs characteristics of statistical dispersion, which considers, for example, a location along a temperature range and a spread of temperature data about the location. For example, in various embodiments, the location may comprise an average or mean of a plurality of temperature values and the spread (or dispersion, variability or scatter) represents an extent to which the plurality of temperature values is spread (or dispersed) about the location. Examples of statistical dispersion pertinent to this disclosure include sample standard deviation, sample range, interquartile range, sample variance, sample mean absolute difference and sample median absolute difference. Values of statistical dispersion typically have the same units of the quantity being considered. Thus, as described herein, where temperature is the quantity being considered, corresponding values for the statistical dispersion, including each of the examples provided above, will typically be expressed in units of temperature. As described below, a failed brake exhibiting an abnormally cold temperature may be detected by first determining a location (*e.g.,* a mean value of temperature) and then a statistical dispersion (*e.g.,* a standard deviation about the location). A failed brake may then be detected if the temperature of a brake is less than or equal to a threshold value determined by subtracting a value of temperature representative of the spread of temperature data from a value representative of the location of the temperature data (*e.g.,* by subtracting a value representative of the standard deviation from a value representative of the mean of the temperatures of a plurality of brakes).

For example, in various embodiments, the brake system 200 may comprise four temperature sensors: (i) T_{LO}, associated with the left outboard brake mechanism 206, (ii) T_{LI}, associated with the left inboard brake mechanism 208, (iii) T_{RO}, associated with the right outboard brake mechanism 210 and (iv) T_{RI}, associated with the right inboard brake mechanism 212. The BCU 250 is configured to receive data from each temperature sensor 293 via the one or more data buses 295. During or following a brake activation, in various embodiments, the BCU 250 may determine a standard deviation of the data received from the four temperature sensors, T_{LO}, T_{LI}, T_{RO} and T_{RI}.

For example, the standard deviation may be determined using a sample standard deviation formula, expressed as: 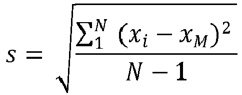 where xᵢ is the i^{th} temperature, x_{M} is the mean temperature and N is the number of temperature values which, in the above example, is four (N=4). In various embodiments, the mean temperature, x_{M}, is simply the average of each of T_{LO}, T_{LI}, T_{RO} and T_{RI}. In various embodiments, the i^{th} temperature corresponding to a particular brake mechanism or brake stack may be a running average of the brake temperature data received by the BCU 250 during a brake actuation or, in various embodiments, the i^{th} temperature corresponding to a particular brake mechanism or brake stack may be a subset of the data received during a brake actuation, such as, for example, the final data point received. In various embodiments, a cold outlier may be identified, for example, as a brake mechanism or brake stack having a corresponding temperature reading (*e.g.,* an i^{th} temperature reading corresponding to one or more of T_{LO}, T_{LI}, T_{RO} and T_{RI}) less than or equal to a multiple of the standard deviation, s, from the mean temperature, x_{M}. In various embodiments, the multiple of the standard deviation (or of any other value of statistical dispersion) is a constant value greater than or equal to unity multiplied by the standard deviation (or other value of statistical dispersion).

A benefit of such manner of identifying a cold outlier (*e.g.,* a brake mechanism indicating an abnormally cold temperature reading in a corresponding brake stack) is the pressure data associated with the cold outlier and provided to the BCU 250 may read within a normal range. As noted above, this may be due, for example, to a broken piston or an upstream clog in a hydraulic line. Thus, while the pressure data may indicate an operable brake mechanism, the temperature data, indicative of a cold outlier, may indicate the brake mechanism is either not functioning or functioning below capability. In various embodiments, the BCU 250 may thus be configured to provide an indicator or an alert to the cockpit via an output device 296, such as, for example, an indicator light, or to maintenance personnel through, for example, maintenance diagnostic equipment 297 (also an output device) configured to connect to the BCU 250 and query the health of the brake system 200. The indicator or alert via the output device 296 (or 297) may inform cockpit or maintenance personnel of the presence of one or more abnormally cold temperature conditions, notwithstanding pressure data indicative of normally functioning brake mechanisms. For example, the indicator or alert via the output device 296 (or 297) may display a status of the various brake mechanisms - *e.g.,* via a display indicating "normal" or "cold" using a colored light - or display real-time or time-averaged measurements of the various pressure or temperature sensors described above.

While the foregoing description refers variously to electrical to and hydraulic systems, the disclosure contemplates no preference between the two systems or with similar such systems used in operation of the brake system 200. Accordingly, the principles described herein and above are applicable to brake systems in general without regard to the underlying systems used to operate such brake systems.

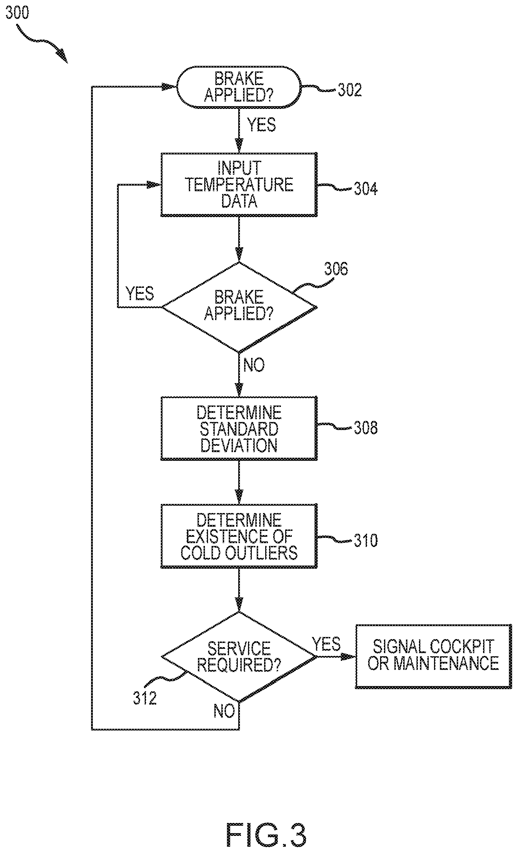

Referring now to FIG. 3, a method 300 of detecting a brake failure is provided with reference to a flow chart that illustrates logic implemented in the BCU 250, in accordance with various embodiments. The method includes several general steps in detecting a brake failure. In a first step 302, a determination is made as to whether the brakes are undergoing a brake actuation. If the brakes are being applied, temperature data taken from temperature sensors associated with brake mechanisms in the brakes may be received by the brake control unit 250 and processed during a second step 304. In various embodiments, the temperature data may be received by the processor as a temperature data stream providing real time temperature data from each of the brake mechanisms. In various embodiments, the processing may comprise computing a running average of the temperatures associated with each of the brake stacks within the various brake mechanisms. In a third step 306, a determination is made as to when the brake actuation terminates. In a fourth step 308, following termination of the brake actuation, the temperature data may be used to determine a standard deviation (or some other measure of statistical dispersion) of the temperature data obtained from each of the brake mechanisms. In a fifth step 310, a determination is made as to the existence of one or more cold outliers. If a cold outlier is identified, a signal is directed to cockpit or maintenance personnel indicating such during a sixth step 312. If no cold outlier is identified, then the system returns to the first step 302 and repeats.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

In various embodiments, system program instructions or controller instructions may be loaded onto a tangible, non-transitory, computer-readable medium (also referred to herein as a tangible, non-transitory, memory) having instructions stored thereon that, in response to execution by a controller, cause the controller to perform various operations. The term "non-transitory" is to be understood to remove only propagating transitory signals *per se* from the claim scope and does not relinquish rights to all standard computer-readable media that are not only propagating transitory signals *per se.* Stated another way, the meaning of the term "non-transitory computer-readable medium" and "non-transitory computer-readable storage medium" should be construed to exclude only those types of transitory computer-readable media that were found by *In Re Nuijten* to fall outside the scope of patentable subject matter under 35 U.S.C. § 101.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system for determining brake failure, comprising:
a plurality of brake mechanisms (100);
a plurality of sensors connected among the plurality of brake mechanisms (100) and configured to provide temperature data corresponding to each of the plurality of brake mechanisms (100) to a processor; and
an output device configured to provide an alert upon a determination by the processor that one or more of the plurality of brake mechanisms (100) is operating at an abnormally cold temperature.

2. The system of claim 1, wherein each of the plurality of brake mechanisms (100) includes a brake stack (126) and the plurality of sensors (196) is configured to monitor a temperature of the brake stack (126) within each of the plurality of brake mechanisms (100), and optionally wherein the brake stack (126) within each of the plurality of brake mechanisms (100) includes a pressure plate (118) and at least one of the plurality of sensors is connected to the pressure plate (118).

3. The system of claim 1 or 2, wherein the processor is configured to determine a location temperature value based on the temperature data corresponding to each of the plurality of brake mechanisms (100).

4. The system of claim 3, wherein the processor is configured to determine a statistical dispersion temperature value based on the temperature data corresponding to each of the plurality of brake mechanisms (100).

5. The system of claim 4, wherein the processor is configured to determine that one or more of the plurality of brake mechanisms (100) is operating at the abnormally cold temperature by comparing the temperature data corresponding to each of the plurality of brake mechanisms (100) to the location temperature value and the statistical dispersion temperature value.

6. The system of claim 6, wherein the location temperature value is a mean temperature value and the statistical dispersion temperature value is a multiple of a standard deviation, and optionally wherein the processor is configured to determine that one or more of the plurality of brake mechanisms (100) is operating at the abnormally cold temperature by comparing the temperature data corresponding to each of the plurality of brake mechanisms (100) to the mean temperature value minus the multiple of the standard deviation.

7. The system of any preceding claim, further comprising one or more pressure sensors connected among the plurality of brake mechanisms (100) and configured to provide pressure data corresponding to each of the plurality of brake mechanisms (100) to the processor, and optionally wherein the output device is an indicator light disposed within an aircraft cockpit or maintenance diagnostic equipment configured to connect to the processor.

8. A brake system for an aircraft, comprising:
a plurality of brake mechanisms (100), including a first brake mechanism and a second brake mechanism;
a first temperature sensor connected to the first brake mechanism and configured to provide a first temperature data corresponding to the first brake mechanism to a processor;
a second temperature sensor connected to the second brake mechanism and configured to provide a second temperature data corresponding to the second brake mechanism to the processor; and
an output device configured to provide an alert upon a determination by the processor that one or more of the first brake mechanism and the second brake mechanism is operating at an abnormally cold temperature.

9. The brake system of claim 8, wherein the first brake mechanism includes a first brake stack and the first temperature sensor is configured to monitor a first temperature of the first brake stack and the second brake mechanism includes a second brake stack and the second temperature sensor is configured to monitor a second temperature of the second brake stack.

10. The brake system of claim 9, wherein the processor is configured to determine a mean temperature corresponding to at least the first temperature data and the second temperature data.

11. The brake system of claim 10, wherein the processor is configured to determine a standard deviation based on the mean temperature corresponding to at least the first temperature data and the second temperature data.

12. The brake system of claim 11, wherein the processor is configured to determine that at least one of the first brake mechanism and the second brake mechanism is operating at the abnormally cold temperature by comparing the first temperature data and the second temperature data to the mean temperature minus a multiple of the standard deviation.

13. The brake system of claim 12, further comprising one or more pressure sensors connected among the plurality of brake mechanisms (100) and configured to provide pressure data corresponding to each of the plurality of brake mechanisms to the processor, and optionally wherein the output device is an indicator light disposed within an aircraft cockpit or maintenance diagnostic equipment configured to connect to the processor.

14. A method (300) for detecting a failure among a plurality of brake mechanisms (100), comprising:
receiving a temperature data stream from a plurality of temperature sensors corresponding to the plurality of brake mechanisms;
determining a location temperature value and a statistical dispersion temperature value based on the temperature data stream;
comparing the temperature data stream to the location temperature value minus a multiple of the statistical dispersion temperature value; and
generating an indication if one or more of the plurality of brake mechanisms (100) is operating at an abnormally cold temperature based on the comparing the temperature data stream to the location temperature value minus the multiple of the statistical dispersion temperature value.

15. The method of claim 14, wherein the location temperature value is a mean temperature value and the statistical dispersion temperature value is a standard deviation and wherein a processor is configured to determine that one or more of the plurality of brake mechanisms is operating at the abnormally cold temperature by comparing the temperature data stream to the mean temperature value minus the multiple of the standard deviation, or wherein each of the plurality of brake mechanisms (100) includes a brake stack and the plurality of temperature sensors is configured to monitor a temperature of the brake stack (126) within each of the plurality of brake mechanisms (100).
